(19) Europäisches Patentamt
European Patent Office
Office européen des brevets

(11) **EP 1 085 301 B1**

(12) **EUROPEAN PATENT SPECIFICATION**

(45) Date of publication and mention
of the grant of the patent:
**16.01.2013 Bulletin 2013/03**

(51) Int Cl.:
***G01F 1/32*** *(2006.01)*

(21) Application number: **00118681.6**

(22) Date of filing: **29.08.2000**

(54) **Vortex Flowmeter**

Wirbel-Durchflussmesser

Débitmètre à tourbillons

(84) Designated Contracting States:
**DE GB NL**

(30) Priority: **14.09.1999  JP 26075299
03.07.2000  JP 2000200846**

(43) Date of publication of application:
**21.03.2001  Bulletin 2001/12**

(73) Proprietor: **Yokogawa Electric Corporation
Tokyo 180-8750 (JP)**

(72) Inventors:
  • **Wada, Masami,
c/o Yokogawa Electric Corporation
Musashino-shi, Tokyo 180-8750 (JP)**
  • **Hondo, Masanori,
c/o Yokogawa Electric Corporation
Musashino-shi, Tokyo 180-8750 (JP)**
  • **Andoh, Tetsuo,
c/o Yokogawa Electric Corporation
Musashino-shi, Tokyo 180-8750 (JP)**

(74) Representative: **Henkel, Breuer & Partner
Patentanwälte
Maximiliansplatz 21
80333 München (DE)**

(56) References cited:
**WO-A-98/44317      US-A- 5 372 046
US-A- 5 675 091**

Description

BACKGROUND OF THE INVENTION

**Field of the Invention**

The present invention relates to a vortex flowmeter for measuring the flow rate of a fluid by detecting an alternating signal produced by Karman vortices, wherein a vortex flow-rate signal obtained by letting the alternating signal pass through a filter and A/D-converting the signal by an A/D converter is processed using a microprocessor. More specifically, the invention relates to a vortex flowmeter for which improvements have been made to ensure stable flow-rate detection.

**Description of the Prior Art**

A vortex flowmeter takes advantage of the fact that the frequency at which Karman vortices occur behind a vortex shedder placed in a fluid being measured is proportional to the flow velocity of the fluid. The vortex flowmeter is widely used in the field of measuring flow rates of various fluids for reasons of the flowmeter's simple structure, wide measurement range, and high measurement accuracy.

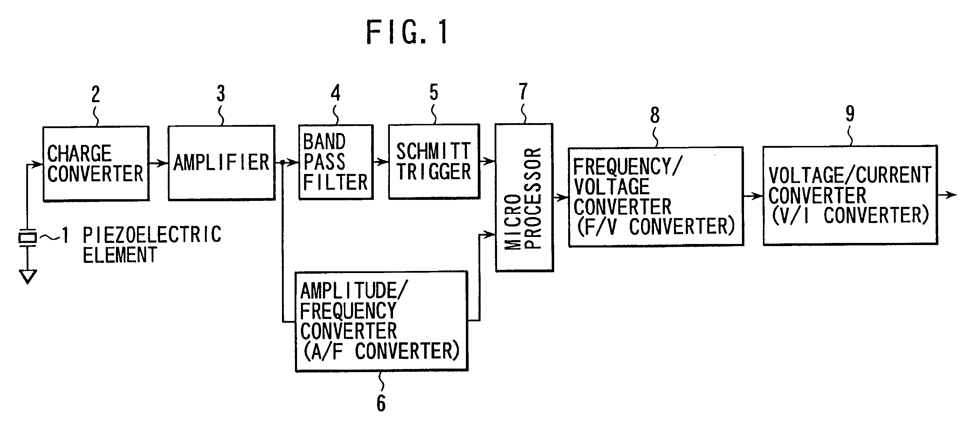

FIG. 1 is a block diagram showing an example of a prior art vortex flowmeter (although only one sensor a piezoelectric element is shown in the diagram, more than one sensor may be included in some cases). An AC charge signal output from a piezoelectric element 1 is converted to an AC voltage signal by a charge converter 2 and the voltage signal is amplified by an amplifier 3.

The voltage signal amplified by the amplifier 3 carries noise components, in addition to the frequency band being measured. These noise components are removed by a bandpass filter 4. The signal that has passed through the bandpass filter 4 is converted to a pulse signal by a Schmitt trigger 5.

The bandpass filter 4 is designed so that the optimum band is selected by means of a microprocessor 7 (CPU) according to the diameter of the vortex flowmeter, fluid density and maximum flow rate.

The signal pulsed by the Schmitt trigger 5 is introduced to the microprocessor 7, where the pulse signal is submitted to frequency, flow-rate and corrective calculations that are performed by calculation means included in the microprocessor 7 using multipliers and calculation programs necessary for flow-rate calculation. Then, the microprocessor 7 outputs a pulse signal corresponding to a flow-rate signal. This pulse signal is converted to an analog signal by a frequency-to-voltage (F/V) converter 8, and then output after being changed by a voltage-to-current (V/I) converter 9 to a signal of desired output mode (for example, a 4-20 mA signal).

Now it should be noted that noise components that are superposed on the vortex signal component of the above-noted prior art vortex flowmeter include:

- noise due to the vibration of piping,

- low-frequency noise such as beat noise,

- high-frequency noise due to, for example, the resonance of a vortex shedder, and

- spike noise.

Although it is possible to significantly reduce the amount of these types of noise using a bandpass filter 4, the remaining amount of noise still adversely affects the signal component. Consequently, noise components may be accidentally pulsed by a Schmitt trigger 5 into a signal component or the Schmitt trigger may fail to pulse the original signal component.

As measures against such problems, a process is performed in the prior art vortex flowmeter following the pulsing of a vortex frequency signal. In this process, a judgment is made in an "on-off" manner using noise judgment means that uses a converted frequency provided by an amplitude-to-frequency (A/F) converter 6, in order to determine whether the component in question is noise or a signal.

However, if high-frequency noise is superposed on a vortex signal and thereby the number of pulses is increased, the vortex signal is output directly as a flow-rate signal. This results in the problem that adequate accuracy is not secured.

WO 98/44317 discloses a vortex flowmeter which senses a pressure of vortices in a flowing fluid and transmits an output related to mass flow. The vortex flowmeter includes a dynamic filter filtering the vortex pressure signal. The dynamic filter provides a first filtered output signal and a second filtered output signal (86). The dynamic filter includes a controllable transfer function. Control circuitry controls the controllable transfer function and provides an output related to mass flow as a function of the first filtered output signal and the second filtered output signal. Transmitter circuitry receives the output signal and transmits a signal related to mass flow.

US 5 372 046 discloses a vortex flow transmitter which has a filtering circuit receiving a noise contaminated input signal representative of the flow and which has a fundamental frequency varying responsively to flow. The filter filters the input signal using one of a family of HP filter characteristics to produce a filtered signal having a frequency representative of the physical parameter. Each member of the family of HP filters has varying corner frequencies, each filter having a unique switchup and a unique switchdown value assigned to it. Adaptive response element select a current HP filter for use in the filter. Adaptive circuitry uses one selection method when the flow is increasing and another selection method when the flow decreases. Finally, output circuitry converts the signal from the filter into a transmitter output, typically a 4-20 mA current or a frequency output representative of the flow.

Finally US 5 675 091 discloses step-wise tracking electronic filter comprises a parallel bank of a plurality of band pass filters respectively having a plurality of electronic switches and respectively having different band widths, and a command signal generating device generating a command signal from the frequency of a primary alternating electrical signal being transmitted through the step-wise tracking electronic filter and being conditioned thereby or from an auxiliary alternating electrical signal obtained for the sole purpose of generating the command signal therefrom; wherein the command signal closes one of the plurality of electronic switches belonging to one of the plurality of band pass filters having a band width substantially including the frequency of the primary alternating electrical signal and opens the electronic switch when the band width of the band pass filter substantially excludes the frequency of the primary alternating electrical signal in an operating mode wherein only one electronic switch is closed at a time, and the command signal closes the first of two electronic switches respectively belonging to an adjacent pair of the band pass filters and opens the second of the two electronic switches when the frequency of the primary alternating electrical signal is equal to a first value of a transition frequency, and closes the second of the two electronic switches and opens the first of the two electronic switches when the frequency of the primary alternating electronic signal is equal to a second value of the transition frequency offset from the first value of the transition frequency.

**SUMMARY OF THE INVENTION**

The object of the present invention is to provide a vortex flowmeter wherein a low-pass filter and means for splitting a frequency band passing through the low-pass filter into a plurality of component frequency bands are located in front of a bandpass filter, the band of a vortex frequency is

analyzed according to the signal strength of each band among the component frequency bands, and the band of the bandpass filter is controlled according to the analysis results, thereby permitting flow-rate measurement with higher precision.

The above object is achieved by a vortex flowmeter according to claim 1. The dependent claims are directed to further advantageous aspects of the invention.

**BRIEF DESCRIPTION OF THE DRAWINGS**

FIG. 1 is a block diagram showing one embodiment of a prior art vortex flowmeter.
FIG. 2 is a block diagram showing one embodiment of a vortex flowmeter according to the present invention.
FIG. 3 is the block diagram of a spectrum analyzer.
FIG. 4 is a schematic view showing the way the bandwidth of a signal to be processed is split into six component bands.
FIG. 5 is the detailed diagram of a spectrum analyzer block.
FIG. 6 is a schematic graph showing the relationship between frequency and gain.
FIG. 7 shows the way noise with a high-frequency band is superposed on a signal with a low-frequency band.
FIG. 8 shows a spectra diagram illustrating the relationship between the amplitude x and the subbands and schematic graphs indicating the configurable range of a bandpass filter.
FIG. 9 are schematic graphs showing the relationship between the amplitude x and frequency of each subband when the flow rate is zero and indicating the state of a bandpass filter when the pass band thereof is set with the minimum flow velocity centered on the pass band.
FIG. 10 are schematic graphs showing the relationship between the saturation detection level SL and the amplitude x of each subband and indicating the state of a bandpass filter with an expanded pass band.
FIG. 11 is the detailed block diagram of a subband filter.
FIG. 12 is the block diagram of a subband filter when both the LPF and HPF thereof are second-order filters.
FIG. 13 is a schematic graph representing a filter configured so as to split a band into component bands with the widths of each two adjacent component bands being in the ratio of 1 to 2.

FIG. 14 is the block diagram of an amplitude measurement circuit.

FIG. 15 is the block diagram of an amplitude measurement circuit configured using a shifter, adder, subtractor and delay element.

FIG. 16 is the block diagram of a spectrum analyzer.

FIG. 17 is the block diagram of a bandpass filter configured using selector and high-pass filters.

FIG. 18 is a schematic graph in which lines for discriminating liquids from gases are drawn according to the relationship between the amplitude and frequency of each subband.

FIG. 19 shows the block diagram of FIG. 2 where a signal line is added for a case when fluids with a plurality of density levels are measured.

FIG. 20 is a waveform chart indicating that low-frequency noise is superposed on a signal and there are missing pulses.

FIG. 21 is a block diagram showing one embodiment of a Schmitt trigger used in the present invention.

FIG. 22 is a waveform chart indicating that there are no missing pulses even if low-frequency noise is superposed on a signal.

FIG. 23 is a waveform chart when a low-frequency signal is pulsed.

FIG. 24 is a block diagram showing another embodiment of a Schmitt trigger used in the present invention.

FIG. 25 is a block diagram showing a more specific embodiment of the Schmitt trigger shown in FIG. 24.

## DETAILED DESCRIPTION OF THE PREFERRED EMBODIMENTS

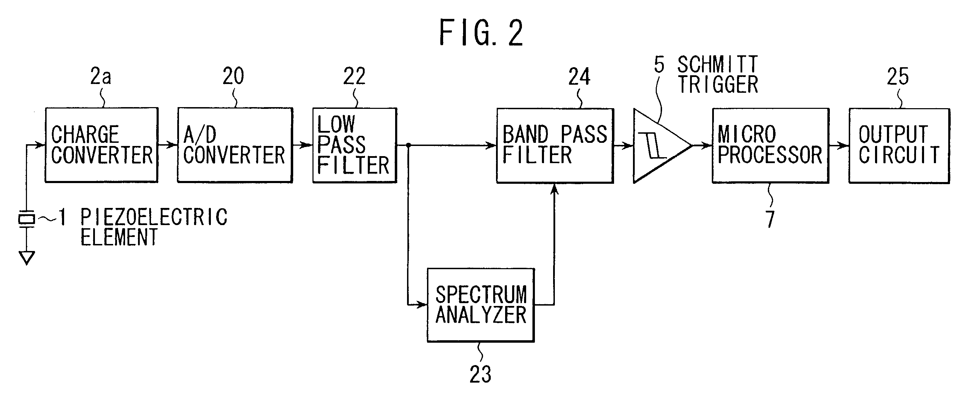

Preferred embodiments of the present invention will now be described in detail with reference to the accompanying drawings. FIG. 2 is a block diagram showing one embodiment of a vortex flowmeter according to the present invention. In FIG. 2, elements that are the same as those in FIG. 1 are given the same references. Although only one sensor is shown in FIG. 2, the embodiment of FIG. 2 is also applicable to vortex flowmeters that use two sensors.

In FIG. 2, the numeral 2a indicates a charge converter (which includes an amplifier 3 shown in FIG. 1), the numeral 20 indicates an A/D converter for converting an analog signal passing through the charge converter 2a to a digital signal, and the numeral 22 indicates a low-pass filter for removing high-frequency components from the output signal (vortex flow-rate signal) of the A/D converter 20.

The numeral 23 indicates a spectrum analyzer, which consists of subband filters made of digital filters discussed later and a judgment circuit. The spectrum analyzer 23 splits the frequency band of a signal passing through the low-pass filter 22 into a plurality of component bands to determine which of the split component bands contains the signal to be measured.

The numeral 24 indicates a bandpass filter for letting a signal to be measured pass therethrough according to the analysis results of the spectrum analyzer 23. The numeral 5 indicates a Schmitt trigger for converting a signal passing through the bandpass filter 24 to a pulse signal.

The signal pulsed by the Schmitt trigger 5 is introduced to a microprocessor 7, where the pulse signal is submitted to frequency, flow-rate and corrective calculations that are performed by calculation means included in the microprocessor 7 using multipliers and calculation programs necessary for flow-rate calculation. Then, the microprocessor 7 outputs a pulse signal corresponding to a flow-rate signal. This pulse signal is converted to an analog signal by an F/V converter (not shown in the figure) that composes an output circuit 25, and then output after being changed by a V/I converter (not shown in the figure) to a signal of desired output mode (for example, a 4-20 mA signal).

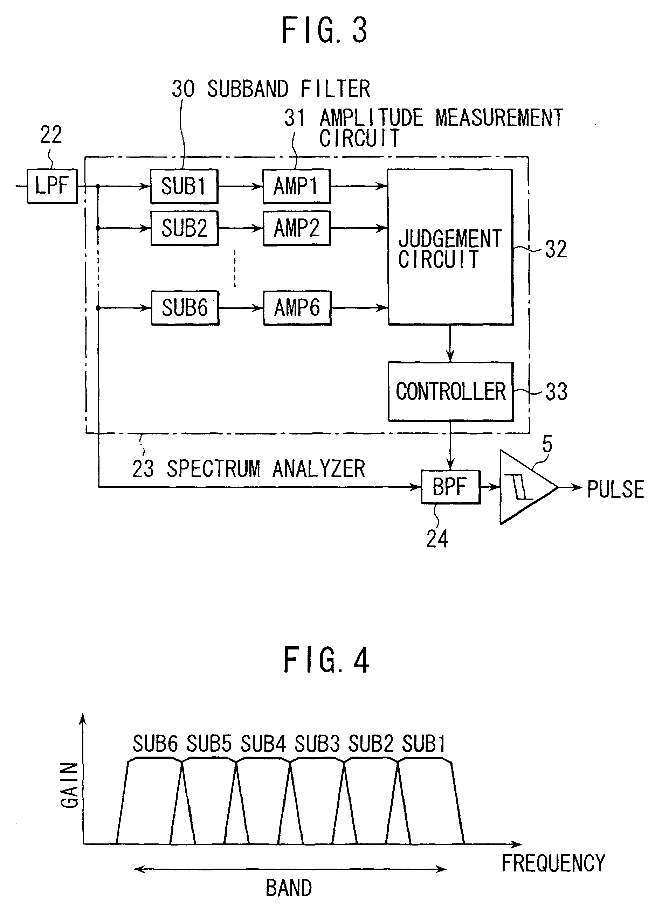

FIG. 3 is the block diagram of the spectrum analyzer 23. The numeral 30 indicates subband filters consisting of SUB1 to SUB6, whereby the band of a signal to be processed (the band of the vortex signal is determined by the diameter and flow-rate range of a vortex flowmeter) is split into, for example, six component bands (not limited to six but as many as required), as shown in FIG. 4. The divisions of a band thus obtained are hereinafter referred to as subbands.

Referring back to FIG. 3, the numeral 31 indicates amplitude measurement circuits consisting of AMP1 to AMP6, whereby the amplitude of each subband shown in FIG. 4 is measured. Each of AMP1 to AMP6 of amplitude measurement circuits 31 is a combination of an absolute value circuit and a low-pass filter or a combination of a square-law circuit and a low-pass filter.

The numeral 32 indicates a judgment circuit for comparing the amplitudes of individual subbands to determine in which subband a vortex signal exists.

The pass band of the bandpass filter 24 is controlled by means of a controller 33, so that a subband determined by the judgment circuit 32 is centered on the pass band.

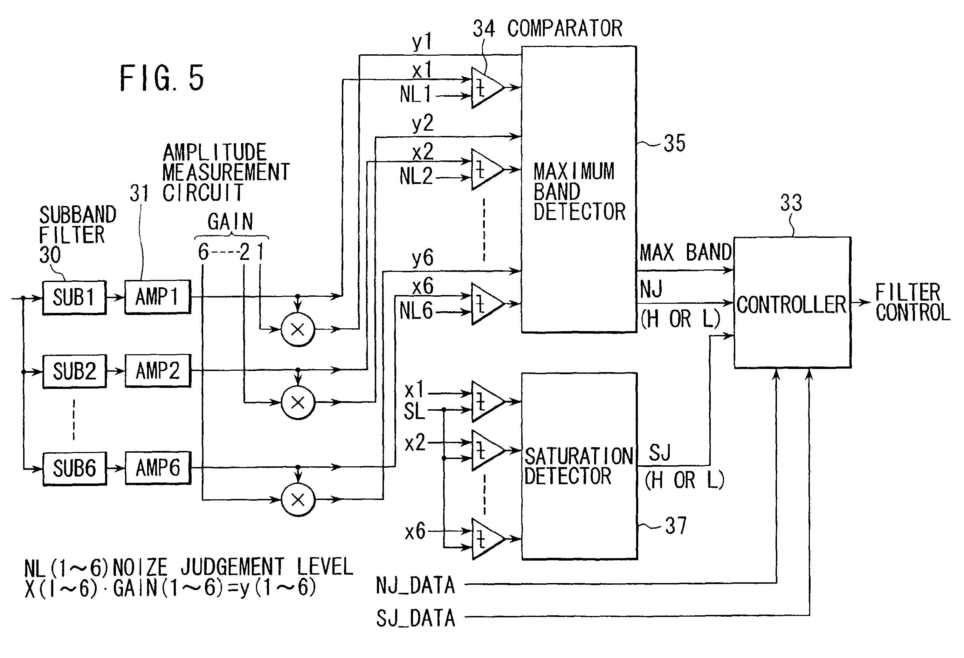

Now the method of identifying the vortex signal will be described by referring to FIG. 5 that shows the detailed block diagram of a spectrum analyzer block.

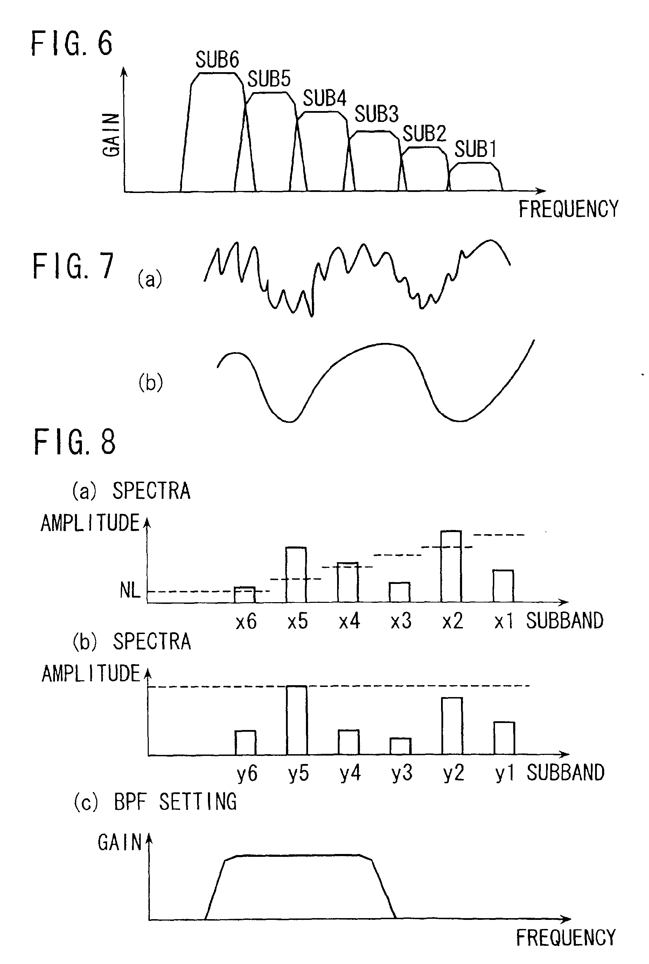

x1 to x6 are the amplitudes of individual subbands provided by the amplitude measurement circuits 31. The amplitudes of these individual subbands are multiplied by GAIN1 to GAIN6 having different values to obtain outputs y1 to y6. FIG. 6 shows the relationship between the frequency and gain of each subband, where the outputs y1 to y6 equal the amplitudes of signals made to pass through bandpass filters having different gains (because GAIN1 to GAIN6 differ from one another).

As described earlier, the amplitude of a signal provided by a vortex flowmeter is determined by the diameter, fluid density and flow velocity. Sensing methods used for vortex flowmeters include stress detection, pressure detection and ultrasonic detection methods. The stress detection method takes advantage of the law that the amplitude of a signal is proportional to the fluid density and the square of the flow velocity. The ultrasonic detection method is based on the principle that the amplitude of a signal is proportional to the sonic velocity and flow velocity of a fluid.

In either method, the amplitude increases as the flow velocity increases (i.e., the frequency rises). Consequently, the gain of a subband with a lower frequency is set to a larger value, whereas the gain of a subband with a higher frequency is set to a smaller value.

The relationship between the frequency and amplitude is predictable to some degree, whereby noise judgment levels NL are set on a subband-by-subband basis.

In FIG. 5, NL1 to NL6 are noise judgment levels set for individual subbands. The amplitudes x1 to x6 of the subbands are input to comparators 34 for comparison with the noise judgment levels NL. A maximum band detector 35 outputs a signal MAX_BAND corresponding to a subband whose amplitude y is maximum among the subbands whose amplitudes x are greater than their respective noise judgment levels NL.

A controller 33 sets the bandpass filter 24 (see FIG. 2) to a band having the signal MAX_BAND in the center thereof.

For example, if such a waveform wherein noise having a high-frequency subband SUB2 is superposed on a signal having a low-frequency subband SUB5 as shown in FIG. 7(a) is input, spectra shown in FIGS. 8(a) and 8(b) are obtained. In this example, the maximum band detector 35 judges the subband SUB5, whose amplitude y is maximum as shown in FIG. 8(b) among the subbands SUB2, SUB4, SUB5 and SUB6 whose amplitudes x are greater than their respective noise judgment levels NL as shown in FIG. 8(a), to be the signal. Accordingly, the controller 33 sets the pass band of the bandpass filter 24 as shown in FIG. 8(c). Consequently, a signal shown in FIG. 7(b) is obtained as the output of the bandpass filter 24.

Referring back to FIG. 5, the output NJ of the maximum band detector 35 provides a high state if the amplitude x of at least one subband is higher than the noise judgment level NL thereof, or provides a low state if the amplitudes x of all subbands are lower than the noise judgment levels NL thereof.

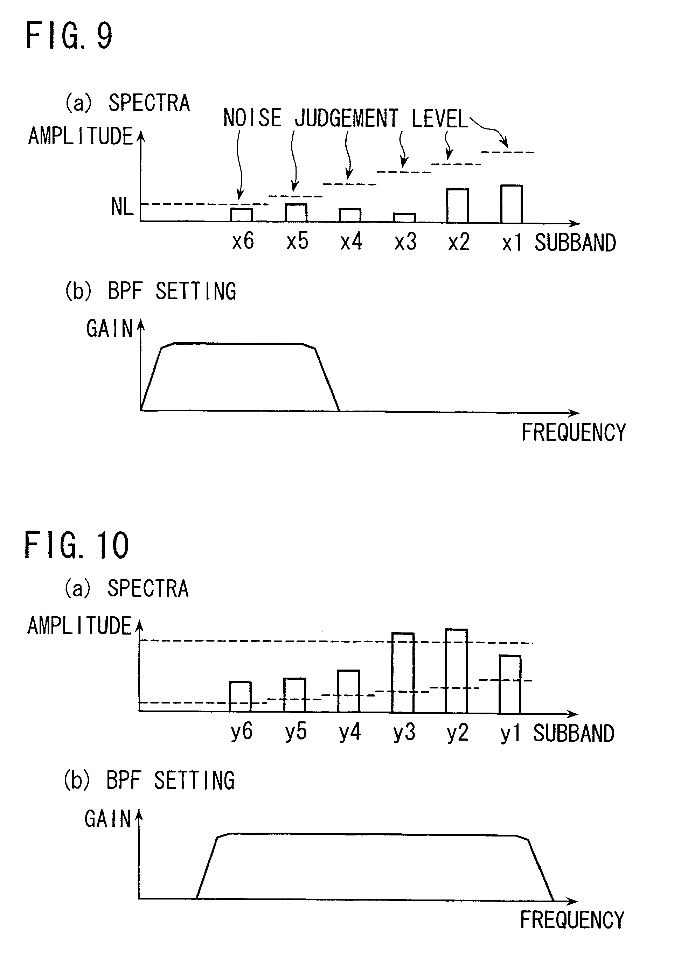

An example of a spectrum when the flow rate is zero is shown in FIG. 9(a). The amplitudes x of all subbands are lower than their respective noise judgment levels NL. In that case, the maximum band detector 35 sets the output NJ to a low state.

The controller 33 controls the bandpass filter 24 according to a signal NJ_DATA previously set therein, and the bandpass filter 24 cuts off the output thereof if the output NJ is in a low state. In addition, the bandpass filter 24 is set to a pass band having the minimum flow velocity in the center thereof, as shown in FIG. 9(b). Noise immunity increases when the bandpass filter 24 cuts off the output thereof. By setting the pass band of the bandpass filter 24 as shown in FIG. 9(b), it is possible to quickly start tracking the flow rate as it rises.

Now it should be noted that there is no guarantee that spectrum analysis is performed in a normal way as discussed heretofore if a signal becomes saturated. On the other hand, the fact that a signal is saturated means that the signal is sufficiently large and the effect of noise is minimal.

As shown in FIG. 10(a), a saturation detection level SL is set so as to be lower than the amplitude x of a subband when the signal is saturated.

Referring back to FIG. 5, a saturation detector 37 outputs a low state if the amplitudes x of all subbands are lower than the saturation detection level SL, or a high state if the amplitude x of at least one subband is higher than the saturation detection level SL. The controller 33 judges the vortex signal to be sufficiently large if the output SJ of the saturation detector 37 goes high, thus widening the pass band of the bandpass filter 24 according to a preset signal SJ_DATA, as shown in FIG. 10(b).

It should be noted here that the noise judgment levels NL, saturation detection level SL, GAIN1 to GAIN6, NJ_DATA and SJ_DATA are parameters determined according to such conditions as the diameter, range of flow velocity, and fluid density.

By configuring the vortex flowmeter as described above, it is possible to remove superposed noise even if the bandwidth thereof is within a given signal bandwidth. This permits flow-rate measurement to be performed with increased stability.

Now an explanation will be made of subband filters 30 (see FIG. 3) that are used in the present invention and located after the low-pass filter 22.

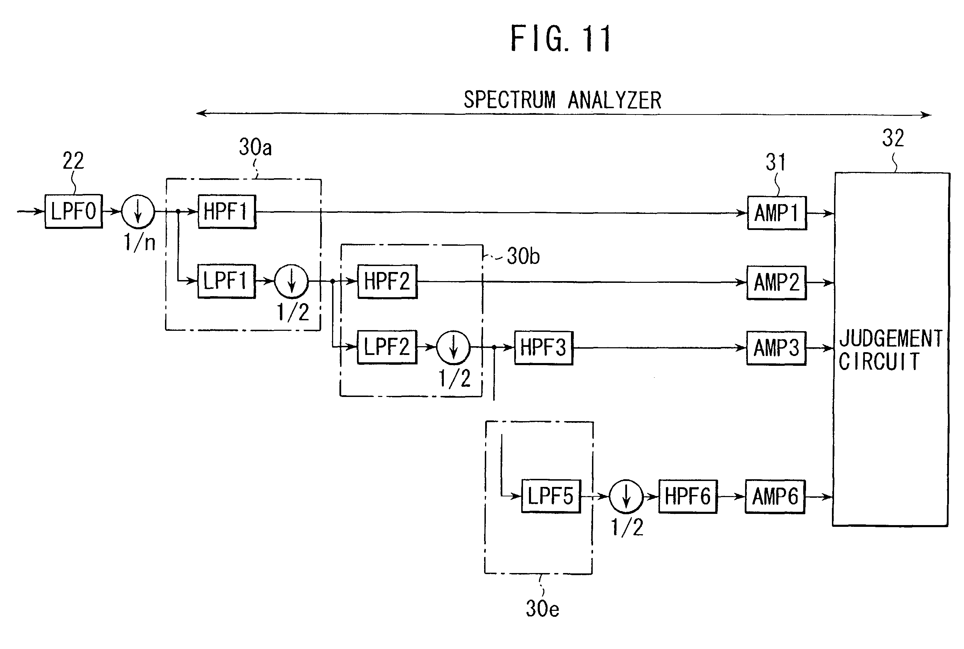

FIG. 11 is a detailed block diagram of the subband filters 30 shown in FIG. 3. In FIG. 11, the low-pass filter 22 is symbolized as LPF0 and high-pass filters and low-pass filters composing subband filters 30a to 30e as HPF1 to HPF6 and LPF1 to LPF5. The filters discussed here are moving-average filters that can be configured using adders and delay elements, such as registers. As indicated by a symbol $\downarrow 1/2$, the sampling rate is decimated by half each time the signal passes through a low-pass filter.

A digital filter is in principle composed of:

- multipliers,
- adders, and
- delay devices, such as registers.

The multiplier, among other components, tends to have a larger scale of hardware configuration.

The LPF0 indicated by 22 in FIG. 11 is a low-pass filter having a band determined by the diameter and flow-rate range and is a moving-average filter that can be configured using adders and delay elements, such as registers. The sampling rate of the output of the LPF0 is decimated according to that band.

The LPF1 to LPF5 are moving-average filters of the first order, or of the second or greater order.

The transfer function of a first-order moving-average filter is represented as

$$(1 + Z^{-1})/2 \qquad \qquad (\text{Equation 1})$$

The transfer function of an nth-order moving-average filter is represented as

$$\{(1 + Z^{-1})/2\}^n \qquad \qquad (\text{Equation 2})$$

After being processed by the moving-average calculation, the sampling rate of output of each of these filters is decimated by half.

The HPF1 to HPF6 are high-pass filters whose transfer functions are represented as

$$(1 - Z^{-1})/2 \qquad \qquad (\text{Equation 3})$$

or

$$\{(1 - Z^{-1})/2\}^n \qquad \qquad (\text{Equation 4})$$

which is the nth-order representation of Equation 3.

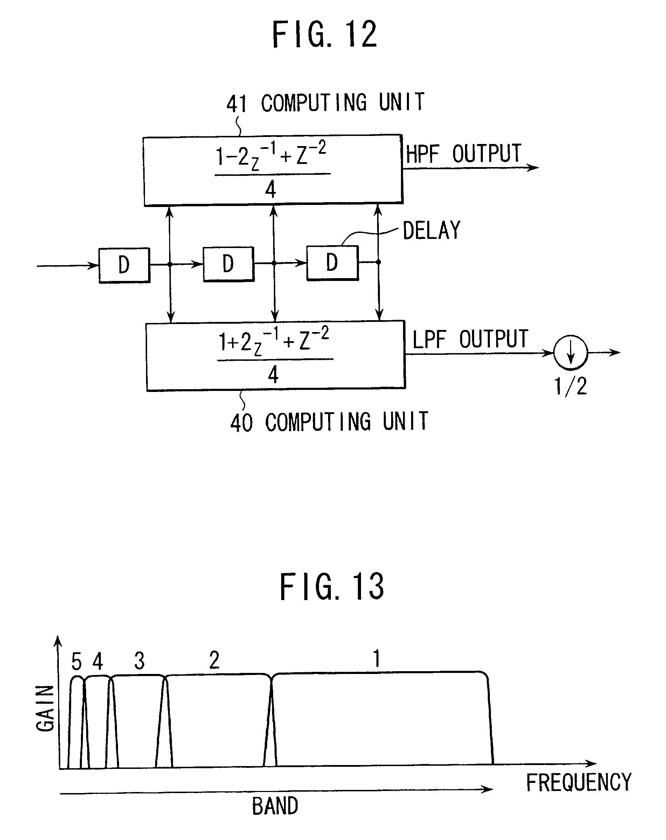

FIG. 12 is the block diagram of a subband filter when both the LPF and HPF thereof are second-order filters. The bandpass filter is configured by connecting computing units 40 and 41 in parallel to the back of each delay element.

With these filters, it is possible to configure a filter that splits a band into subbands with the widths of every two adjacent subbands being in the ratio of 1 to 2, as shown in FIG. 13 (although the subbands share the same transfer function, they have different bandwidths because the sampling rate of their output is decimated after moving-average calculation).

Such a filter as discussed above can be configured using adders, a subtractor and delay elements D only. Since the filter does not require a general-purpose multipliers, it can have a small-scale hardware configuration.

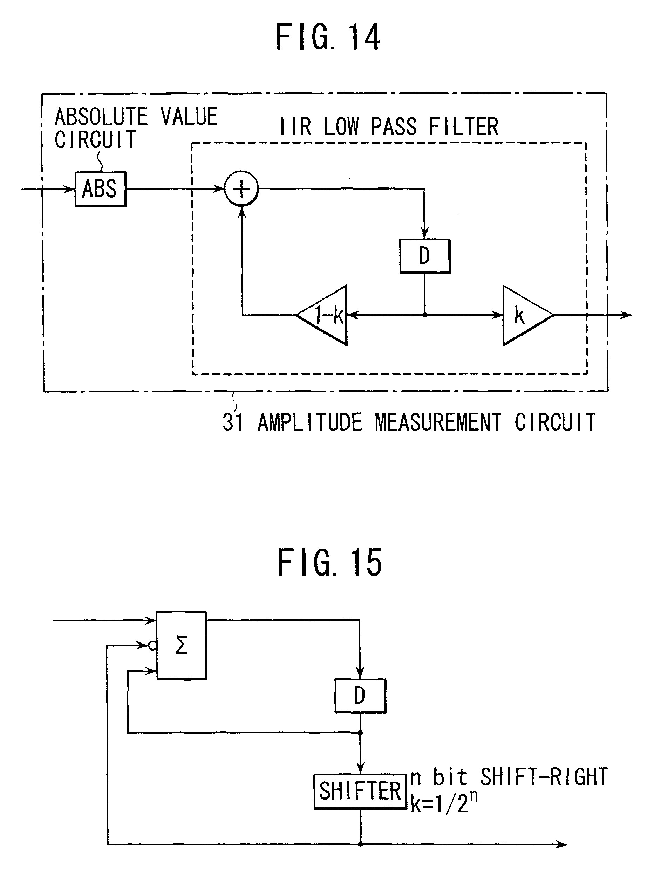

FIG. 14 is the block diagram of an amplitude measurement circuit 31. This block diagram corresponds to each of AMP1 to AMP6 shown in FIG. 3 or FIG. 11. The amplitude measurement circuit 31 is composed of an absolute value circuit ABS and IIR low-pass filter.

In FIG. 14, a coefficient k has a value that satisfies $0 < k < 1$. The IIR low-pass filter can be configured using a shifter, adder, subtractor and delay element, as shown in FIG. 15. If, for example, the shifter is designed to shift-right three bits (i.e., multiply by 1/8), the filter of FIG. 13 can be configured so that $k = 0.125$ and $1 - k = 0.875$.

The above-mentioned filter only requires an adder, subtractor and delay element. Since the filter does not require a general-purpose multiplier, it can have a small-scale hardware configuration.

Since filters for spectrum analysis perform decimation of sampling rate by half, they differ from one another only in the data of a memory device for each subband, such as a register. Accordingly, it is possible for these filters to share the same computing unit and process the data using the same calculation, without being dependent on the band.

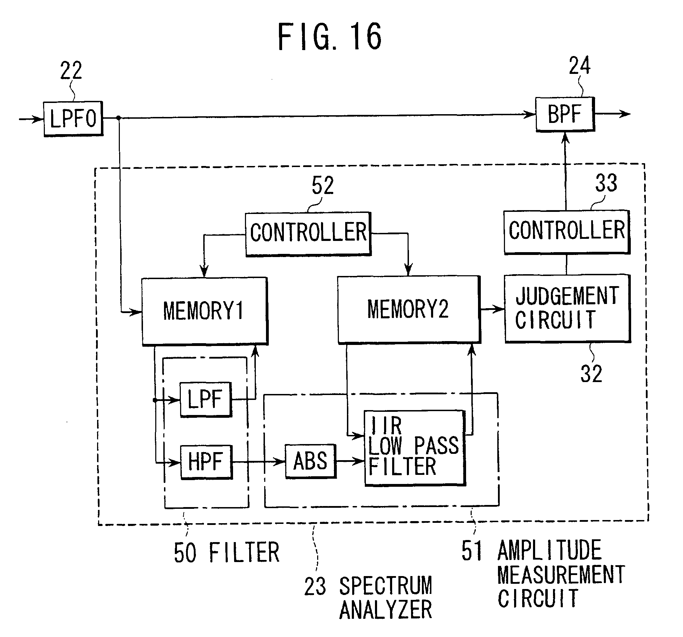

FIG. 16 is the block diagram of the spectrum analyzer 23 (see FIG. 2, FIG. 3 or FIG. 11). The spectrum analyzer 23 comprises a computing block 50 for performing filter calculations (see FIG. 12), MEMORY1 used to perform calculations for the LPF, MEMORY2 used to perform calculations for the IIR low-pass filter of an amplitude measurement circuit 51 (see FIG. 14), and a controller 52 for controlling these memory devices.

As discussed above, signal decimation by half makes it possible for the filters to share the same computing circuit, thereby dramatically reducing the amount of hardware.

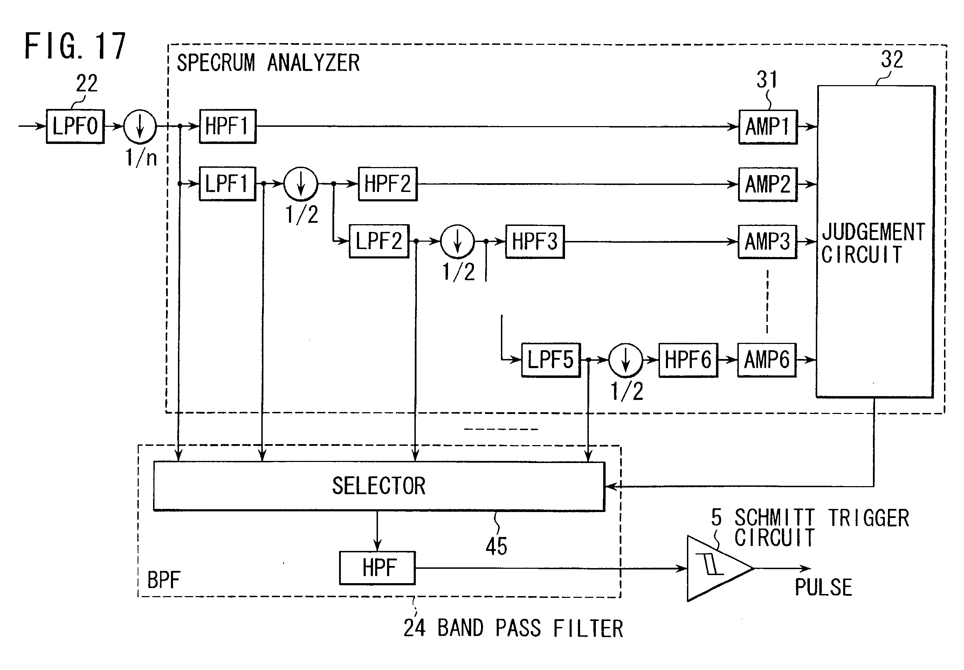

The pass band of the bandpass filter BPF indicated by 24 in FIG. 2, FIG. 3 or FIG. 16 is controlled according to the results of spectrum analysis. A bandpass filter is in principle a combination of a low-pass filter and high-pass filter. It is possible to exclude the low-pass filter, however, by configuring the bandpass filter 24 as shown in FIG. 17.

As described earlier, bandpass filters SUB1 to SUB6 are used as shown in FIG. 3 or FIG. 11, in order to be able to perform spectrum analysis. In the present invention, these bandpass filters are configured by first arranging a low-pass filter and then a high-pass filter, as shown in FIG. 17. In this figure, LPF0 to LPF5 are low-pass filters having different bands. The low-pass filters LPF0 to LPF5 are equivalent to variable-bandwidth low-pass filters if a selection is made from the outputs of the low-pass filters LPF0 to LPF5.

In hardware design, a variable-bandwidth low-pass filter is replaced by a selector 45, thereby dramatically reducing the scale of hardware configuration. For the spectrum analysis in the present invention, subband filters are configured so that a given band is split into subbands with the widths of every two adjacent subbands being in the ratio of 1 to 2 and the output of each subband filter is decimated by half.

In other words, the sampling rate at which the outputs of the low-pass filters LPF0 to LPF5 in FIG. 17 are sampled differ between every two adjacent filters in the ratio of 2 to 1. Selecting from the outputs of the low-pass filters LPF0 to LPF5 causes the sampling rate of a high-pass filter HPF composing a bandpass filter BPF to change at the same time. Consequently, the transfer function of the high-pass filter HPF is automatically changed as the result of a change in the sampling rate. This means that no circuit for controlling the band of the high-pass filter HPF is necessary, thus simplifying the hardware configuration.

It should be noted that bandpass filters that compose subband filters for spectrum analysis have relatively narrow bands for the benefit of improved frequency resolution. For this reason none of these bandpass filters is used as the bandpass filter BPF for shaping vortex waveforms. Furthermore, the BPF needs to have a relatively wide band in order to be able to track the vortex frequency well in time when the frequency changes.

For example, if the band of a vortex signal lies in SUB3 in FIG. 4, the band of the BPF must be configured so as to be as wide as from SUB2 to SUB4. In this example, the LPF2 and HPF3 in FIG. 17 correspond to SUB3. The selector 45 for composing the BPF selects the output of the LPF1 composing SUB2, rather than the LPF2 composing SUB3. Needless to say, the HPF is designed so that the band thereof at a sampling frequency when the LPF1 is selected forms the lower-frequency side band of the SUB3. At this point, the band of the HPF need not be precisely adjusted to that of SUB4.

Furthermore, the BPF is not limited to the band discussed above. If noise immunity is of top priority, such a relatively narrow band as noted above may be appropriate. If traceability for vortex frequencies is of top priority, it is possible to configure the BPF so that the "band thereof covers SUB1 to SUB5 for a signal of SUB3."

In the earlier explanation, an example is discussed wherein noise occurring during measurement of only one type of fluid is removed and a frequency band having the maximum amplitude is identified as a vortex signal. The vortex flowmeter of the present invention automatically discriminates between liquids and gases or steam and serves also as a flowmeter for measuring both of these fluids without needing any change in, for example, converter settings.

In a conventional method of flow-rate measurement, the converter of a vortex flowmeter has both a bandpass filter for liquids and a bandpass filter for gases, separately. The output signal of either of these bandpass filters is pulsed by a Schmitt trigger located after the filter and then the signal's frequency is determined. If the frequency is a vortex frequency within a liquid domain, an output is provided by using a signal processed by the filter for liquids. If the frequency is a vortex frequency within a gas domain, an output is provided by using a signal processed by the filter for gases.

Since this method judges the type of fluid only by the frequency, the method's condition of measurability is that vortex frequencies in liquid and gas domains do not overlap with each other.

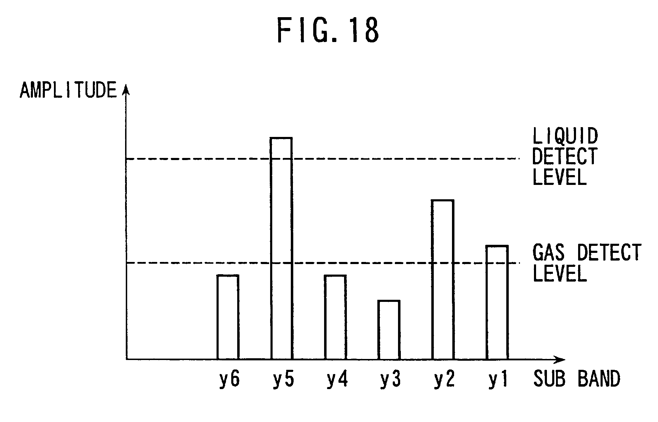

In the present invention, a liquid detection level and a gas detection level are defined according to the relationship between subbands and amplitudes thereof, as shown in FIG. 18.

The detected frequency and amplitude are compared with setpoints within the CPU. If the amplitude is at or above the liquid detection level, the signal of the fluid being measured is output as that of a liquid. If the amplitude is at or above the gas detection level but below the liquid detection level, the signal of the fluid being measured is output as that of a gas. Thus, a signal is output according to the settings defined for each type of fluid.

In the embodiment of FIG. 18, y5 is the signal band and the fluid being measured is identified as a liquid. In this embodiment, a signal with an amplitude below the gas detection level is judged to be noise and the flowmeter output is cut off. This judgment is not limited to classification of fluids into liquids and gases, however. If there is a certain degree of difference in the fluid density, it is possible to discriminate among a plurality of gases or liquids and thereby switch the flowmeter output accordingly.

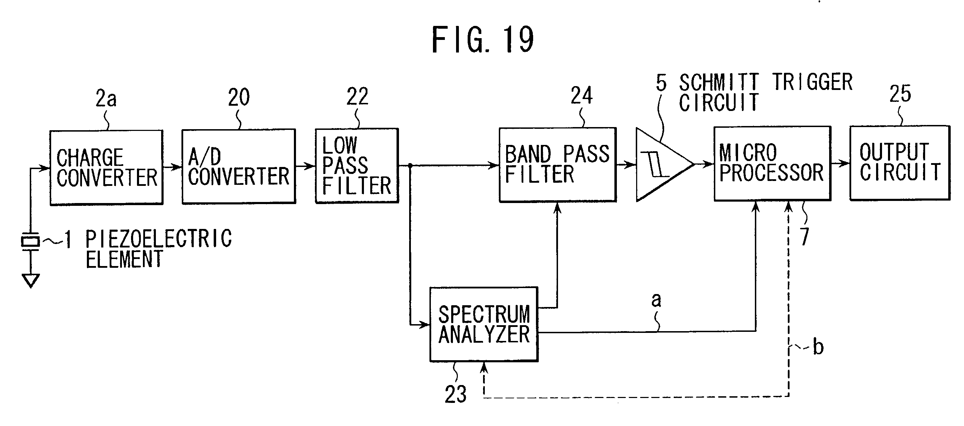

FIG. 19 is the result of adding signal lines **a** and **b** to the block diagram of FIG. 2 for a case where fluids with a plurality of density levels are measured. The signal line indicated by **a** carries a status signal for informing the CPU of the result of judgment (as to whether liquid or gas) made by the spectrum analyzer 23. By means of the status signal the CPU sets the flowmeter output to provide an output corresponding to each individual fluid (for example, 0-100% output).

In a case where liquids and gases are discriminated between by means of the microprocessor (CPU) 7, the CPU reads the frequency and amplitude information, as indicated by a dashed line **b**. The CPU then sets the output thereof according to the judgment of the information and determines the pass band of the bandpass filter 24 through the spectrum analyzer 23.

Now the Schmitt trigger 5 (see FIG. 2) used in the present invention will be described in detail.

As shown in FIG. 2, the output of the sensor 1 is converted to a voltage signal by means of the charge converter 2a and the voltage signal is converted to a digital signal by the A/D converter 20. Then, the digital signal is introduced to the bandpass filter 24 for noise removal and pulsed by the Schmitt trigger 5.

Under normal conditions, a low-state output of a Schmitt trigger flips to a high state if the input thereof rises above a trigger level TLH. Conversely, a high-state output of the Schmitt trigger flips to a low state if the input thereof falls below a trigger level TLL. The Schmitt trigger is thus given hysteresis as wide as TLH - TLL, permitting itself to function effectively against high-frequency noise.

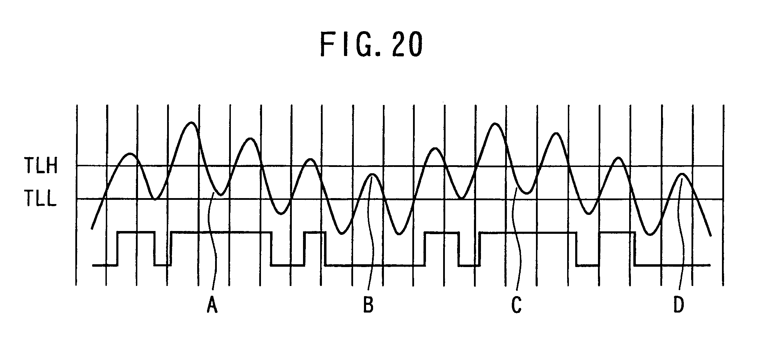

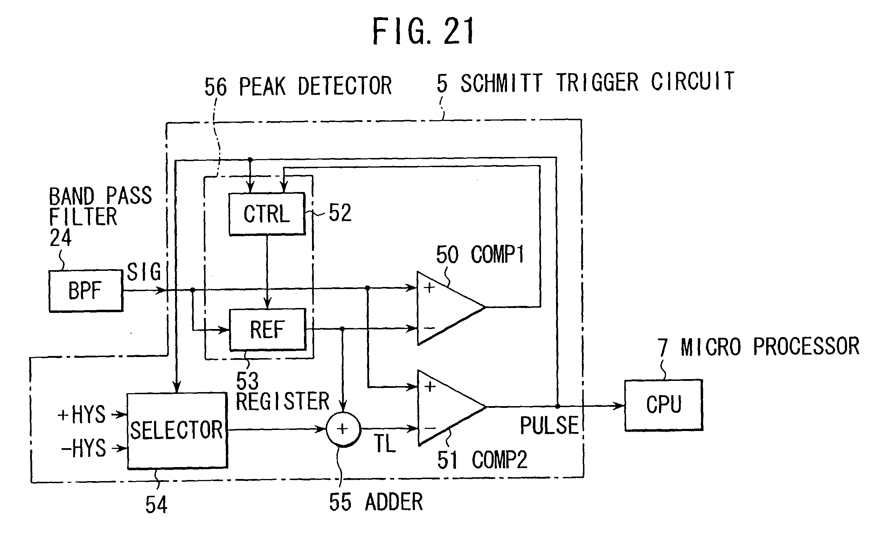

In the prior art vortex flowmeter, there has been the problem that precise flow-rate measurement is not possible because missing pulses occur, as indicated by A, B, C, and D in FIG. 20, if low-frequency noise due to vibration, for example, is superposed on a vortex waveform. In contrast, precise flow-rate measurement free of missing pulses is still possible under such conditions as mentioned above in the case of the Schmitt trigger used in the present invention. FIG. 21 is a block diagram showing one embodiment of the Schmitt trigger used in the present invention.

In FIG. 21, the numeral 50 indicates a first comparator and the numeral 51 indicates a second comparator, the output terminal of the bandpass filter 24 being connected to the + terminals (non-inverting terminals) of the first and second comparators 50 and 51. The output terminal of a register 53 is connected to the - terminal of the first comparator 50 and the output terminal of an adder 55 is connected to the - terminal (inverting terminal) of the second comparator 51.

The output terminal of the register 53 is connected to one of the two input terminals of the adder 55 and the output terminal of a selector 54 is connected to the other input terminal of the adder 55. The numeral 52 indicates a controller. The output terminals of the first and second comparators 50 and 51 are connected to the two input terminals of the controller 52, the output terminal thereof being connected to one of the two input terminals of the register 53. The output of the bandpass filter 24 is supplied to the other input terminal of the register 53. The output terminal of the second comparator 51 is connected to the input terminal of the selector 54, whereto a positive (+) or negative (-) hysteresis signal determined by the characteristics of the sensor 1 (see FIG. 2) is input.

In regard to the configuration described above, the behaviors of the controller 52 and register 53, which serve as a peak detector 56, will be explained now.

When a pulse output PULSE is high, the value of a register REF is updated if COMP1 is high, that is, SIG > REF is true. Consequently, the maximum value of SIG after the pulse output PULSE has changed to a high state is retained by the register REF.

When a pulse output PULSE is low, the value of the register REF is updated if COMP1 is low, that is, SIG < REF is true. Consequently, the minimum value of SIG after the pulse output PULSE has changed to a low state is retained by the register REF.

The selector 54 outputs -HYS when the pulse output PULSE is high, or outputs +HYS when the pulse output PULSE is low. Consequently, a trigger level TL provided by the adder 55 is:

- the maximum value of SIG - HYS, if the pulse output PULSE is high, or
- the minimum value of SIG + HYS, if the pulse output PULSE is low.

This means the trigger level TL is always set according to the peak values.

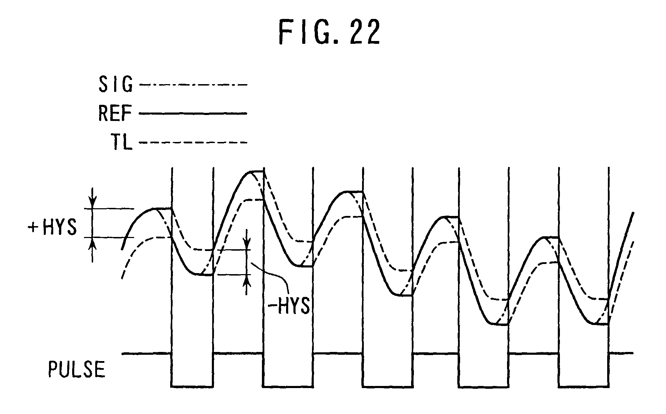

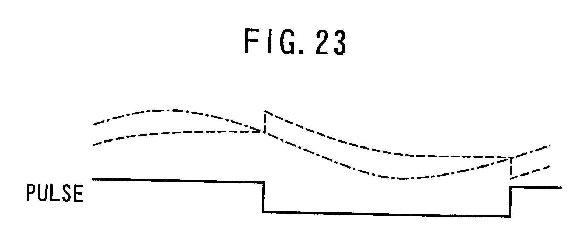

FIG. 22 shows the waveform of each signal when low-frequency noise is superposed on an output waveform (SIG). Since the trigger level (indicated by a dotted line) is always set with reference to the peak value, no missing pulses occur in the output signal (indicated by a chain line). Consequently, precise flow-rate measurement is possible. By virtue of the above-mentioned behavior of the Schmitt trigger 5, it is possible to also correctly pulse low-frequency signals, as shown in FIG. 23.

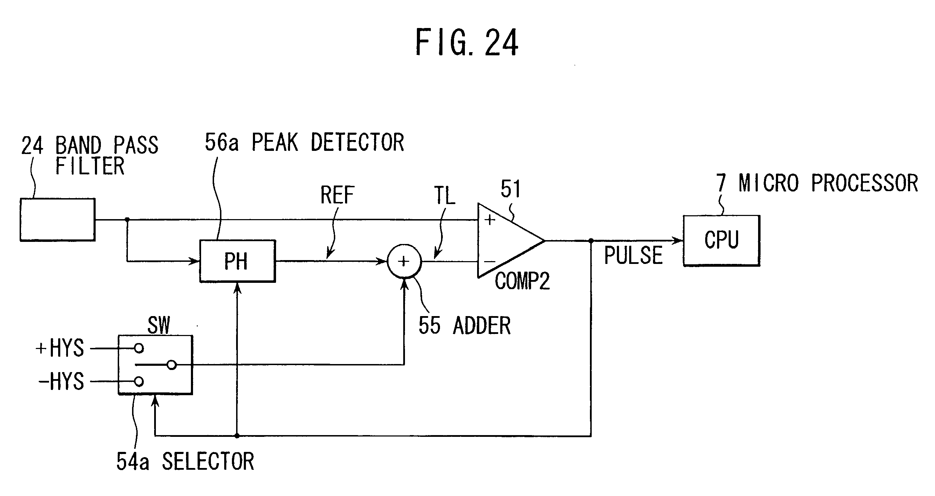

FIG. 24 is a block diagram showing another embodiment of the Schmitt trigger 5 (see FIG. 2) used in the present invention. In FIG. 24, the embodiment works as a positive peak detector when the pulse output PULSE of COMP2 is high. That is, the maximum value of SIG after the pulse output PULSE has changed to a high state is retained.

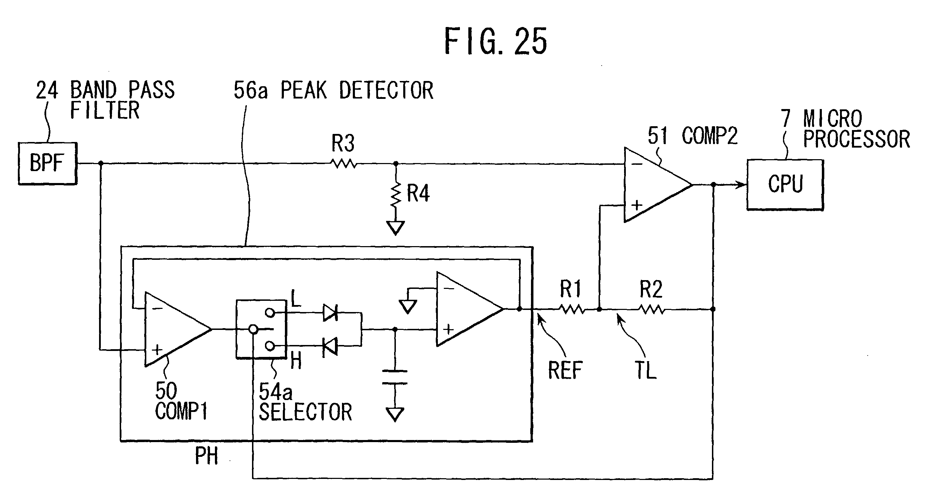

When the pulse output PULSE of COMP2 is low, the embodiment works as a negative peak detector. That is, the minimum value of SIG after the pulse output PULSE has changed to a low state is retained. An analog switch 54a (selector) outputs the "maximum value of SIG + HYS" when the pulse output PULSE is high, or the "minimum value of SIG - HYS" when the pulse output PULSE is low. Consequently, the trigger level TL equals the "maximum value - HYS" when the pulse output PULSE is high, or the "minimum value + HYS" when the pulse output PULSE is low. Thus, the trigger level TL is always set with reference to the peak value. FIG. 25 shows a more specific embodiment of the Schmitt trigger shown in FIG. 24, in which a peak detector is designed so that the polarity

In FIG. 25, the switch on the upper-diode side turns on when the pulse output PULSE is low, so that the peak detector 56a serves as a maximum value detection circuit. Conversely, the switch on the lower-diode side turns on when the pulse output PULSE is high, so that the peak detector 56a serves as a minimum value detection circuit.

Assuming the output of the second comparator 51 is $\pm$VCC, the input to the non-inverting input terminal of the comparator is

$$TL = \frac{R2}{R1+R2}*REF \pm \frac{R1}{R1+R2}*VCC$$

This is equivalent to the value obtained by adding the hysteresis $\pm \dfrac{R1}{R1+R2}*VCC$ to the output of the peak hold circuit 56a.

Now assuming R3 = R1 and R4 = R2, the input to the inverting input terminal of the second comparator 51 is

$$\frac{R1}{R1+R2}*SLG$$

Consequently, the hysteresis $\pm$HYS of the selector 54 shown in FIG. 24 equals $\pm \dfrac{R2}{R1}*VCC$ determined from FIG. 25.

Now it should be noted that the polarity of the pulse output PULSE in FIG. 25 is reverse to that shown in FIG. 24.

In the explanation of the present invention given above, only specific preferred embodiments are mentioned for the purpose of describing the present invention and showing examples of carrying out the invention. It should be understood that all modifications falling within the present invention are covered by the appended claims.

As explained so far, according to the present invention the band of a vortex signal whereon noise is superposed is split into subbands by means of subband filters so that frequency components are isolated from the signal. Consequently, it is possible to effectively remove various types of noise and ensure stable flow-rate detection.

**Claims**

1.    A vortex flowmeter for measuring the flow rate of a fluid, comprising:

a sensor (1) for detecting an alternating signal produced by Karman vortices in said fluid;
an A/D converter (20) for A/D-converting said alternating signal and for outputting a digital vortex flow-rate signal;
a low-pass filter (22) for receiving said digital vortex flow-rate signal and for letting pass through a frequency band determined by the diameter and flow-rate range of said vortex flowmeter;
a bandpass filter (24) for receiving the low-pass filtered signal of the low-pass filter (22); and
a spectrum analyzer (23) for receiving the low-pass filtered signal of the low-pass filter (22);
said spectrum analyzer (23) comprises
a plurality of subband filters (30) for splitting a frequency band passing through said low-pass filter (22) into a plurality of split frequency subbands and for analyzing said plurality of split subbands,
a plurality amplitude measurement circuits (31) for measuring the amplitude of each of said plurality of split frequency subbands;
a judgment circuit (32) receiving the output signals of said plurality amplitude measurement circuits (31) and adapted to compare the amplitudes of individual split frequency subbands to determine in which subband a vortex signal (maximum signal) exists; wherein
the bandpass filter (24) is controlled depending on the determination result of the judgment circuit (32) of the spectrum analyzer (23), so as to let pass through a frequency band to be measured.

**2.** The vortex flowmeter of claim 1, wherein said amplitude measurement circuits (31) are a combination of an absolute value circuit and a low-pass filter or a combination of a square-law circuit and a low-pass filter.

**3.** The vortex flowmeter of any of claims 1 or 2, further comprising means for setting a different gain for each of said plurality of split frequency subbands depending on the band thereof and wherein said judgment circuit (32) is configured to determine a frequency band with the maximum amplitude as the band of a vortex frequency.

**4.** The vortex flowmeter of claim 3, wherein a gain is set to a smaller value for a subband in the domain of a higher frequency band.

**5.** The vortex flowmeter of any of claims 1 to 4, further comprising means for setting an noise judgment level for each of said plurality of split frequency subbands and wherein said judgment circuit (32) is configured so that the frequency band of a signal at or above said noise judgment level is selected as the band of a vortex frequency.

**6.** The vortex flowmeter of any of claims 1 to 4, wherein a plurality of density judgment levels are set for said plurality of split frequency subbands and the frequency band of a signal above the density judgment level thereof is selected as the band of a vortex frequency.

**7.** The vortex flowmeter of claim 6, further comprising means for displaying a measurement range according to a selected density level.

**8.** The vortex flowmeter of claim 6, wherein fluids are liquids and gases.

**9.** The vortex flowmeter of claim 5, wherein the bandpass filter is set to a preset band if the amplitudes of all frequency subbands are below a noise judgment level.

**10.** The vortex flowmeter of claim 5, wherein the bandpass filter is set so as to zero the output thereof, if the amplitudes of all frequency subbands are below a noise judgment level.

**11.** The vortex flowmeter of claim 9, wherein the band of said bandpass filter is set so that the minimum flow velocity is centered thereon.

**12.** The vortex flowmeter of claim 3, wherein an appropriate saturation detection level is set for each of said plurality of split frequency subbands and said bandpass filter is set to a preset band if the signal of any split frequency subband is above the saturation detection level thereof.

**13.** The vortex flowmeter of claim 12, wherein the band of said bandpass filter covers the overall range of flow velocity.

**14.** The vortex flowmeter of claim 1, wherein the transfer function of a high-pass filter for splitting a frequency band into said plurality of frequency subbands is defined as $(1 - Z^{-1})/2$ or $\{(1 - Z^{-1})/2\}^n$.

**15.** The vortex flowmeter of claim 2, wherein an IIR low-pass filter for use with an amplitude measurement circuit is composed of a shifter, adder, subtractor and delay element.

**16.** The vortex flowmeter of claim 1, wherein said low-pass filter arranged between said A/D converter and said spectrum analyzer is a moving-average filter.

**17.** The vortex flowmeter of claim 17, wherein the sampling rate of a frequency signal passing through said low-pass filter is decimated according to a frequency band determined by the diameter and flow-rate range of said vortex flowmeter.

**18.** The vortex flowmeter of claim 17, wherein said moving-average filter is composed of an adder and delay elements.

**19.** The vortex flowmeter of claim 1, wherein low-pass filters composing said subband filters are **characterized by** both moving-average calculation and sampling rate decimation.

**20.** The vortex flowmeter of claim 1, wherein sampling rate decimation by half is performed so that all subband filters share the same computational expression.

21. The vortex flowmeter of claim 1, wherein sampling rate decimation by half is performed so that the computing units of each subband filter are placed in common use by other subband filters.

22. The vortex flowmeter of claim 1, wherein the low-pass filter of a bandpass filter for shaping vortex waveforms is selected according to the output of said low-pass filter composing said subband filters.

23. The vortex flowmeter of claim 1, wherein the sampling rate of said subband filters are reduced in the ratio of 2 to 1 between every two adjacent filters, whereby the band of a high-pass filter in said bandpass filter for shaping vortex waveforms is automatically changed.

24. The vortex flowmeter of claim 1, wherein the band of said waveform-shaping bandpass filter is set so as to include bands that precede and follow a selected band.

25. The vortex flowmeter of claim 1, wherein a pulsing circuit is located after said bandpass filter and the trigger level of said pulsing circuit is changed by keeping track of peaks in an input signal from said bandpass filter.

26. The vortex flowmeter of claim 25, wherein said trigger level is set by means of hysteresis with reference to the output of a peak detector.

27. The vortex flowmeter of claim 26, wherein said peak detector is switched according to the polarity of the output of said pulsing circuit, thus serving as a maximum value detection circuit when said output is high or serving as a minimum value detection circuit when said output is low.

**Patentansprüche**

1. Wirbeldurchflussmesser zum Messen der Flussrate eines Fluids mit:

   einem Sensor (1) zum Erfassen eines Wechselsignals, das durch Karman-Wirbel in dem Fluid erzeugt wird;
   einem A/D-Wandler (20) zum A/D-Wandeln des Wechselsignals und zum Ausgeben eines digitalen Wirbelflussratensignals;
   einem Tiefpassfilter (22) zum Empfangen des digitalen Wirbelflussratensignals und zum Durchlassen eines Frequenzbandes, das von dem Durchmesser und dem Flussratenbereich des Wirbeldurchflussmessers bestimmt ist;
   einem Bandpassfilter (24) zum Empfangen des Tiefpass-gefilterten Signals des Tiefpassfilters (22); und
   einem Spektralanalysierer (23) zum Empfangen des Tiefpass-gefilterten Signals des Tiefpassfilters (22);
   wobei der Spektralanalysierer (23) umfasst:

   eine Mehrzahl von Subbandfiltern (30) zum Auftrennen eines Frequenzbandes, das durch das Tiefpassfilter (22) läuft, in eine Mehrzahl von aufgetrennten Frequenzsubbänder und zum Analysieren der Mehrzahl von aufgetrennten Subbändern;
   eine Mehrzahl von Amplitudenmessschaltungen (31) zum Messen der Amplitude eines jeden der Mehrzahl von aufgetrennten Frequenzsubbändern;
   eine Entscheidungsschaltung (32) zum Empfangen der Ausgabesignale der Mehrzahl von Amplitudenmessschaltungen (31) und ausgestaltet zum Vergleichen der Amplituden der einzelnen aufgetrennten Frequenzsubbänder, um zu bestimmen, in welchem Subband ein Wirbelsignal (maximal Signal) existiert; wobei das Bandpassfilter (24) in Abhängigkeit des Bestimmungsergebnisses der Entscheidungsschaltung (31) des Spektrumanalysierers (23) gesteuert wird, um so ein zu messendes Frequenzband durchzulassen.

2. Wirbeldurchflussmesser nach Anspruch 1, bei dem die Amplitudenmessschaltungen (31) eine Kombination einer Absolutwertschaltungen und eines Tiefpassfilters oder eine Kombination einer Abstands-Quadrat-Schaltung und eines Tiefpassfilters sind.

3. Wirbeldurchflussmesser nach einem der Ansprüche 1 oder 2, des Weiteren mit einem Mittel zum Einstellen einer unterschiedlichen Verstärkung für jedes der Mehrzahl von aufgetrennten Frequenzsubbändern in Abhängigkeit von dem Band, und wobei die Entscheidungsschaltung (32) ausgestaltet ist, um ein Frequenzband mit der maximalen Amplitude zu bestimmen, als das Band einer Wirbelfrequenz.

4.  Wirbeldurchflussmesser nach Anspruch 3, bei dem eine Verstärkung auf einen kleineren Wert für ein Subband in der Domäne eines höheren Frequenzbands eingestellt wird.

5.  Wirbeldurchflussmesser nach einem der Ansprüche 1 bis 4, des Weiteren mit einem Mittel zum Einstellen eines Rauschentscheidungspegels für jedes der Mehrzahl von getrennten Frequenzsubbändern, und wobei die Entscheidungsschaltung (32) ausgestaltet ist, so dass das Frequenzband eines Signals bei oder oberhalb des Rauschentscheidungspegels als das Band einer Wirbelfrequenz ausgewählt wird.

6.  Wirbeldurchflussmesser nach einem der Ansprüche 1 bis 4, bei dem eine Mehrzahl von Dichteentscheidungspegeln für die Mehrzahl von getrennten Frequenzsubbändern eingestellt wird, und wobei das Frequenzband eines Signals oberhalb des Dichteentscheidungspegels als das Band einer Wirbelfrequenz ausgewählt wird.

7.  Wirbeldurchflussmesser nach Anspruch 6, des Weiteren mit einem Mittel zum Anzeigen eines Messbereichs entsprechend einem ausgewählten Dichtepegel.

8.  Wirbeldurchflussmesser nach Anspruch 6, bei dem die Fluide Flüssigkeiten und Gase sind.

9.  Wirbeldurchflussmesser nach Anspruch 5, bei dem das Bandpassfilter auf ein voreingestelltes Band gesetzt wird, wenn die Amplitude aller Frequenzsubbänder unterhalb des Rauschentscheidungspegels ist.

10. Wirbeldurchflussmesser nach Anspruch 5, bei dem das Bandpassfilter so eingestellt wird, dass seine Ausgabe Null wird, wenn die Amplituden aller Frequenzsubbänder unterhalb des Rauschentscheidungspegels liegen.

11. Wirbeldurchflussmesser nach Anspruch 9, bei dem das Band des Bandpassfilters so eingestellt wird, dass die minimale Flussgeschwindigkeit hierauf zentriert ist.

12. Wirbeldurchflussmesser nach Anspruch 3, bei dem geeignete Sättigungsdetektionspegel für jedes der Mehrzahl von getrennten Frequenzsubbändern eingestellt wird, und wobei das Bandpassfilter auf ein voreingestelltes Band eingestellt wird, wenn das Signal von allen getrennten Frequenzsubbändern oberhalb des Sättigungsdetektionspegels liegt.

13. Wirbeldurchflussmesser nach Anspruch 12, bei dem das Band des Bandpassfilters den gesamten Bereich der Flussgeschwindigkeit abdeckt.

14. Wirbeldurchflussmesser nach Anspruch 1, bei dem die Übertragungsfunktion eines Hochpassfilters zum Auftrennen eines Frequenzbandes in eine Mehrzahl von Frequenzsubbändern wie folgt festgelegt ist: $(1 - Z^{-1})/2$ oder $\{(1 - Z^{-1})/2\}^n$.

15. Wirbeldurchflussmesser nach Anspruch 2, bei dem ein IIR-Tiefpassfilter zur Verwendung mit einer Amplitudenmessschaltung aus einem Shifter, einem Addierer, einem Subtrahierer und einem Verzögerungselement zusammengesetzt ist.

16. Wirbeldurchflussmesser nach Anspruch 1, bei dem das Tiefpassfilter. das zwischen dem A/D-Wandler und dem Spektrumanalysierer angeordnet ist, ein Filter mit änderbarem Mittelwert ist.

17. Wirbeldurchflussmesser nach Anspruch 17, bei dem die Abtastrate eines Frequenzsignals, das durch das Tiefpassfilter läuft, entsprechend einem Frequenzband vermindert wird, dass durch den Durchmesser und einen Flussratenbereich des Wirbeldurchflussmessers bestimmt ist.

18. Wirbeldurchflussmesser nach Anspruch 17, bei dem das Filter mit änderbaren Mittelwert aus Addier- und Verzögerungselementen gebildet ist.

19. Wirbeldurchflussmesser nach Anspruch 1, bei dem die Tiefpassfilter, die die Subbandfilter bilden, sowohl durch eine änerbare Mittelwertberechnung als auch durch eine Abtastratenverminderung bestimmt sind.

20. Wirbeldurchflussmesser nach Anspruch 1, bei dem die Abtastratenverminderung auf die Hälfte durchgeführt wird, so dass alle Subbandfilter den gleichen Berechnungsausdruck teilen.

21. Wirbeldurchflussmesser nach Anspruch 1, bei dem die Abtastratenverminderung auf die Hälfte so durchgeführt wird, dass die Berechnungseinheiten für jedes Subbandfilter zur gemeinsamen Verwendung durch andere Subbandfilter angeordnet sind.

22. Wirbeldurchflussmesser nach Anspruch 1, bei dem das Tiefpassfilter eines Bandpassfilters zum Formen von Wirbelsignalformen entsprechend der Ausgabe des Tiefpassfilters ausgewählt wird, der die Subbandfilter bildet.

23. Wirbeldurchflussmesser nach Anspruch 1, bei dem die Abtastrate der Subbandfilter in dem Verhältnis von 2 zu 1 zwischen je zwei benachbarten Filtern vermindert wird, wobei das Band eines Hochpassfilters in dem Bandpassfilter zum Formen der Wirbelsignalverläufe automatisch geändert wird.

24. Wirbeldurchflussmesser nach Anspruch 1, bei dem das Band des Signalverlauf-formenden Bandpassfilters so eingestellt ist, dass es Bänder enthält, die einem ausgewählten Band vorangehen und folgen.

25. Wirbeldurchflussmesser nach Anspruch 1, bei dem eine Puls-Schaltung hinter dem Bandpassfilter angeordnet ist, und wobei der Triggerpegel der Puls-Schaltung geändert wird, in dem den Spitzen eines Eingangssignals des Bandpassfilters gefolgt wird.

26. Wirbeldurchflussmesser nach Anspruch 25, bei dem der Triggerpegel mittels Hysterese gesetzt wird, wobei Bezug auf die Ausgabe eines Spitzendetektors genommen wird.

27. Wirbeldurchflussmesser nach Anspruch 26, bei dem der Spitzendetektor entsprechend der Polarität der Ausgabe der Puls-Schaltung geschaltet wird, so dass er als eine Maximalwertdetektionsschaltung dient, wenn die Ausgabe hoch ist, oder als Minimalwertdetektionsschaltung dient, wenn die Ausgabe niedrig ist.

## Revendications

1. Débitmètre à tourbillons pour mesurer le débit d'un fluide, comprenant :

   un capteur (1) pour détecter un signal alternatif produit par des tourbillons de Karman dans ledit fluide ;
   un convertisseur A/N (20) pour convertir ledit signal alternatif d'analogique à numérique et pour émettre un signal de débit à tourbillons numérique ;
   un filtre passe-bas (22) pour recevoir ledit signal de débit à tourbillons numérique et pour laisser passer à travers une bande de fréquence déterminée par le diamètre et la gamme de débit dudit débitmètre à tourbillons ;
   un filtre passe-bande (24) pour recevoir le signal filtré passe-bas du filtre passe-bas (22) ; et
   un analyseur de spectre (23) pour recevoir le signal filtré passe-bas du filtre passe-bas (22) ;
   ledit analyseur de spectre (23) comprenant
   une pluralité de filtres de sous-bandes (30) pour séparer une bande de fréquence passant à travers ledit filtre passe-bas (22) en une pluralité de sous-bandes de fréquence séparées et pour analyser ladite pluralité de sous-bandes séparées,
   une pluralité de circuits de mesure d'amplitude (31) pour mesurer l'amplitude de chacune de ladite pluralité de sous-bandes de fréquence séparées ;
   un circuit de jugement (32) recevant les signaux d'émission de ladite pluralité de circuits de mesure d'amplitude (31) adapté pour comparer les amplitudes de sous-bandes de fréquence séparées individuelles pour déterminer dans quelle sous-bande un signal à tourbillons (signal maximum) existe ; dans lequel
   le filtre passe-bande (24) est contrôlé en fonction du résultat de la détermination du circuit de jugement (32) de l'analyseur de spectre (23), de façon à laisser passer une bande de fréquence à mesurer.

2. Débitmètre à tourbillons selon la revendication 1, dans lequel lesdits circuits de mesure d'amplitude (31) sont une combinaison d'un circuit à valeur absolue et d'un filtre passe-bas ou une combinaison d'un circuit à loi quadratique et d'un filtre passe-bas.

3. Débitmètre à tourbillons selon l'une quelconque des revendications 1 ou 2, comprenant en outre des moyens pour établir un gain différent pour chacune de ladite pluralité de sous-bandes de fréquence séparées, en fonction de la bande de celles-ci et dans lequel ledit circuit de jugement (32) est configuré pour déterminer une bande de fréquence avec l'amplitude maximale comme bande d'une fréquence de tourbillon.

4. Débitmètre à tourbillons selon la revendication 3, dans lequel un gain est établi à une valeur inférieure pour une sous-bande dans le domaine d'une bande de fréquence supérieure.

5. Débitmètre à tourbillons selon l'une quelconque des revendications 1 à 4, comprenant en outre des moyens pour établir un niveau de jugement de bruit pour chacune de ladite pluralité de sous-bandes de fréquence séparées, et dans lequel ledit circuit de jugement (32) est configuré de sorte que la bande de fréquence d'un signal au niveau ou au-dessus dudit niveau de jugement de bruit soit choisie comme la bande d'une fréquence de tourbillons.

6. Débitmètre à tourbillons selon l'une quelconque des revendications 1 à 4, dans lequel une pluralité de niveaux de jugement de densité est établie pour ladite pluralité de sous-bandes de fréquence séparées et la bande de fréquence d'un signal supérieur au niveau de jugement de densité de celle-ci est choisie comme la bande d'une fréquence de tourbillons.

7. Débitmètre à tourbillons selon la revendication 6, comprenant en outre des moyens pour afficher une gamme de mesure selon un niveau de densité choisi.

8. Débitmètre à tourbillons selon la revendication 6, dans lequel les fluides sont des liquides et des gaz.

9. Débitmètre à tourbillons selon la revendication 5, dans lequel le filtre passe-bande est établi à une bande préétablie si les amplitudes de toutes les sous-bandes de fréquence sont inférieures à un niveau de jugement de bruit.

10. Débitmètre à tourbillons selon la revendication 5, dans lequel le filtre passe-bande est établi de façon à annuler l'émission de celui-ci si les amplitudes de toutes les sous-bandes de fréquence sont inférieures à un niveau de jugement de bruit.

11. Débitmètre à tourbillons selon la revendication 9, dans lequel la bande dudit filtre passe-bande est établie de sorte que la vitesse de flux minimum soit centrée sur celle-ci.

12. Débitmètre à tourbillons selon la revendication 3, dans lequel un niveau de détection de saturation approprié est établi pour chacune de ladite pluralité de sous-bandes de fréquence séparées, et ledit filtre passe-bande est établi à une bande préétablie si le signal d'une sous-bande à fréquence séparée quelconque est supérieur au niveau de détection de saturation de celle-ci.

13. Débitmètre à tourbillons selon la revendication 12, dans lequel la bande dudit filtre passe-bande couvre la gamme complète de vitesse de flux.

14. Débitmètre à tourbillons selon la revendication 1, dans lequel la fonction de transfert d'un filtre passe-haut, pour séparer une bande de fréquence en ladite pluralité de sous-bandes de fréquence, est définie comme $(1 - Z^{-1})/2$ ou $\{(1 - Z^{-1})/2\}^n$.

15. Débitmètre à tourbillons selon la revendication 2, dans lequel un filtre passe-bas IIR à utiliser avec un circuit de mesure d'amplitude est composé d'un déphaseur, d'un additionneur, d'un soustracteur et d'un élément de retard.

16. Débitmètre à tourbillons selon la revendication 1, dans lequel ledit filtre passe-bas disposé entre ledit convertisseur A/N et ledit analyseur de spectre est un filtre à moyenne mobile.

17. Débitmètre à tourbillons selon la revendication 17, dans lequel le taux d'échantillonnage d'un signal de fréquence passant à travers ledit filtre passe-bas est décimé selon une bande de fréquence déterminée par le diamètre et la gamme de débit dudit débitmètre à tourbillons.

18. Débitmètre à tourbillons selon la revendication 17, dans lequel ledit filtre à moyenne mobile est composé d'un additionneur et d'éléments de retard.

19. Débitmètre à tourbillons selon la revendication 1, dans lequel les filtres passe-bas qui composent lesdits filtres de sous-bande sont **caractérisés par** un calcul de moyenne mobile et une décimation du taux d'échantillonnage.

20. Débitmètre à tourbillons selon la revendication 1, dans lequel la décimation du taux d'échantillonnage de moitié est réalisée de sorte que tous les filtres de sous-bande partagent la même expression de calcul.

**21.** Débitmètre à tourbillons selon la revendication 1, dans lequel la décimation du taux d'échantillonnage de moitié est réalisée de sorte que les unités de calcul de chaque filtre de sous-bande soient placées de façon à permettre une utilisation commune par d'autres filtres de sous-bande.

**22.** Débitmètre à tourbillons selon la revendication 1, dans lequel le filtre passe-bas d'un filtre passe-bande, pour façonner des formes d'onde à tourbillons, est choisi selon l'émission dudit filtre passe-bas composant lesdits filtres à sous-bande.

**23.** Débitmètre à tourbillons selon la revendication 1, dans lequel le taux d'échantillonnage desdits filtres de sous-bande est réduit en un rapport de 2 à 1 entre deux filtres adjacents, moyennant quoi la bande d'un filtre passe-haut dans ledit filtre passe-bande, pour façonner les formes d'onde de tourbillons, est automatiquement changée.

**24.** Débitmètre à tourbillons selon la revendication 1, dans lequel la bande dudit filtre passe-bande pour façonner les formes d'ondes est établie de façon à inclure des bandes qui précèdent et suivent une bande choisie.

**25.** Débitmètre à tourbillons selon la revendication 1, dans lequel un circuit d'impulsion est situé après ledit filtre passe-bande et le niveau de déclenchement dudit circuit d'impulsion est modifié, en suivant des pics dans un signal d'entrée depuis ledit filtre passe-bande.

**26.** Débitmètre à tourbillons selon la revendication 25, dans lequel ledit niveau de déclenchement est établi au moyen d'une hystérèse, en se référant à l'émission d'un détecteur de pic.

**27.** Débitmètre à tourbillons selon la revendication 26, dans lequel ledit détecteur de pic est commuté selon la polarité de l'émission dudit circuit d'impulsion, servant ainsi de circuit de détection de la valeur maximale quand ladite émission est élevée ou servant de circuit de détection de la valeur minimale quand ladite émission est basse.

# FIG. 1

# FIG. 2

SCHMITT TRIGGER

| 2a | 20 | 22 | | 24 | 5 | 7 | 25 |

CHARGE CONVERTER → A/D CONVERTER → LOW PASS FILTER → BAND PASS FILTER → MICRO PROCESSOR → OUTPUT CIRCUIT

~1 PIEZOELECTRIC ELEMENT

SPECTRUM ANALYZER — 23

EP 1 085 301 B1

# FIG. 3

# FIG. 4

FIG. 5

SUBBAND FILTER 30

31 AMPLITUDE MEASUREMENT CIRCUIT

SUB1 — AMP1

SUB2 — AMP2

SUB6 — AMP6

GAIN 1
2
6

34 COMPARATOR

35 MAXIMUM BAND DETECTOR

y1 x1 NL1
y2 x2 NL2
y6 x6 NL6

MAX BAND

NJ (H OR L)

33 CONTROLLER → FILTER CONTROL

37 SATURATION DETECTOR

x1 SL
x2
x6

SJ (H OR L)

NJ_DATA
SJ_DATA

NL (1~6) NOIZE JUDGEMENT LEVEL
X (1~6) · GAIN (1~6) = y (1~6)

FIG. 6

SUB6 SUB5 SUB4 SUB3 SUB2 SUB1

GAIN

FREQUENCY

FIG. 7 (a)

(b)

FIG. 8

(a) SPECTRA

AMPLITUDE

NL

x6 x5 x4 x3 x2 x1 SUBBAND

(b) SPECTRA

AMPLITUDE

y6 y5 y4 y3 y2 y1 SUBBAND

(c) BPF SETTING

GAIN

FREQUENCY

# FIG. 9

(a) SPECTRA

AMPLITUDE

NOISE JUDGEMENT LEVEL

NL

x6    x5    x4    x3    x2    x1   SUBBAND

(b) BPF SETTING

GAIN

FREQUENCY

# FIG. 10

(a) SPECTRA

AMPLITUDE

y6    y5    y4    y3    y2    y1   SUBBAND

(b) BPF SETTING

GAIN

FREQUENCY

# FIG. 11

SPECTRUM ANALYZER

EP 1 085 301 B1

# FIG. 12

41 COMPUTING UNIT

$$\frac{1-2z^{-1}+Z^{-2}}{4}$$ HPF OUTPUT

D    D    D —DELAY

$$\frac{1+2z^{-1}+Z^{-2}}{4}$$ LPF OUTPUT

1/2

40 COMPUTING UNIT

# FIG. 13

GAIN

5 4   3      2              1

FREQUENCY

BAND

# FIG. 14

ABSOLUTE VALUE CIRCUIT

IIR LOW PASS FILTER

ABS

$+$

D

$1-k$

$k$

31 AMPLITUDE MEASUREMENT CIRCUIT

# FIG. 15

$\Sigma$

D

SHIFTER

$n$ bit SHIFT-RIGHT
$k = 1/2^n$

# FIG. 16

22

→ LPF0

24

BPF →

52

CONTROLLER

33

CONTROLLER

MEMORY1

MEMORY2

JUDGEMENT CIRCUIT

LPF

HPF → ABS →

IIR LOW PASS FILTER

32

50 FILTER

23 SPECTRUM ANALYZER

51 AMPLITUDE MEASUREMENT CIRCUIT

# FIG. 17

SPECRUM ANALYZER

22

LPF0

1/n

HPF1 → AMP1 → 31

LPF1 → 1/2 → HPF2 → AMP2

LPF2 → 1/2 → HPF3 → AMP3

JUDGEMENT CIRCUIT

32

LPF5 → 1/2 → HPF6 → AMP6

SELECTOR

BPF

HPF

45

5 SCHMITT TRIGGER CIRCUIT

PULSE

24 BAND PASS FILTER

EP 1 085 301 B1

# FIG. 18

AMPLITUDE

LIQUID
DETECT
LEVEL

GAS DETECT
LEVEL

y6  y5  y4  y3  y2  y1  SUB BAND

FIG. 19

FIG. 20

# FIG. 21

56 PEAK DETECTOR          5 SCHMITT TRIGGER CIRCUIT

BAND PASS
FILTER
24

BPF — SIG

CTRL ~52

50 COMP1

REF

53
REGISTER

+HYS →
−HYS →  SELECTOR

54

55 ADDER

TL

51 COMP2

PULSE

7 MICRO PROCESSOR

CPU

EP 1 085 301 B1

# FIG. 22

SIG ——·——·——
REF ——————
TL  — — — —

+HYS

−HYS

PULSE

EP 1 085 301 B1

FIG. 23

PULSE

# FIG. 24

EP 1 085 301 B1

# FIG. 25

24 BAND PASS FILTER

56a PEAK DETECTOR

51 COMP2

7 MICRO PROCESSOR

BPF

R3

R4

CPU

R1    R2

REF    TL

50 COMP1

54a SELECTOR

L

H

PH

EP 1 085 301 B1

**EP 1 085 301 B1**

**REFERENCES CITED IN THE DESCRIPTION**

**Patent documents cited in the description**

- WO 9844317 A
- US 5372046 A
- US 5675091 A